Europäisches Patentamt

European Patent Office

Office européen des brevets

(11) Publication number: **0 135 423 B1**

# EUROPEAN PATENT SPECIFICATION

(45) Date of publication of patent specification: **23.09.92**

(51) Int. Cl.⁵: **G01S 17/88**, G01S 7/48, G01S 17/36, G01F 23/28, G02B 6/26

(21) Application number: **84401585.9**

(22) Date of filing: **27.07.84**

(54) **Distance measuring system.**

(30) Priority: **30.07.83 JP 138742/83**

(43) Date of publication of application:
**27.03.85 Bulletin 85/13**

(45) Publication of the grant of the patent:
**23.09.92 Bulletin 92/39**

(84) Designated Contracting States:
**CH DE FR GB LI SE**

(56) References cited:
**DE-A- 3 111 743      GB-A- 1 062 967**
**GB-A- 1 193 567      US-A- 3 663 822**
**US-A- 4 287 427      US-A- 4 325 638**

(73) Proprietor: **Kabushiki Kaisha TOPCON**
**75-1, Hasunuma-cho Itabashi-ku**
**Tokyo(JP)**

(72) Inventor: **Ohtomo, Fumio c/o Kabushiki**
**Kaisha TOPCON**
**75-1, Hasunuma-cho Itabashi-ku**
**Tokyo(JP)**
Inventor: **Hori, Nobuo c/o Kabushiki Kaisha**
**TOPCON**
**75-1, Hasunuma-cho Itabashi-ku**
**Tokyo(JP)**

(74) Representative: **Mongrédien, André et al**
**c/o BREVATOME 25, rue de Ponthieu**
**F-75008 Paris(FR)**

EP 0 135 423 B1

## Description

FIELD OF THE INVENTION

The present invention relates to a distance measuring system including an optical adapter in combination with a light-wave rangefinder as set forth in the preamble of appended claim 1. A light-wave rangefinder has been put to practical use principally in the surveying field, in which a distance measuring light wave modulated by a modulation frequency in the range from several tens of kilohertz to some ten megahertz is projected on a desired target point so as to accurately determine the distance to the target point from a phase difference due to a time delay between said distance measuring light wave and the light reflecting from the target point.

BACKGROUND OF THE INVENTION

Recently, use of the light-wave rangefinder has been studied even in measuring fields other than the surveying field in view of easiness of operation and high precision thereof. However, where the light-wave rangefinder is utilized in the aforementioned measuring fields other than the surveying field, there poses problems in that it is impossible to secure a place where a light-wave rangefinder is installed depending on measuring objects or measuring environment, and that the light-wave rangefinder is adversely affected such that the electronic circuit housed in the light-wave rangefinder undergoes noises.

On the other hand, where an attempt is made to measure the liquid level in a petroleum tank or the like by a light-wave rangefinder, if short-circuiting or spark should occur in the electronic circuit housed in the light-wave rangefinder, there involves a danger in that the flammable gases within the tank would be exploded. Therefore, there poses a problem in that the measuring environment is adversely affected by the light-wave rangefinder such that it is not possible to install a light-wave rangefinder within the tank for measurement.

An electro-optical distance measuring apparatus is disclosed in the document US-A-4 325 638. This apparatus comprises optical fibers, objective lens means and photoelectric elements. Due to the structure of its objective means, the apparatus disclosed in this document cannot be used in various types of measuring fields. For example this apparatus cannot be used for measuring the level of a liquid in a tank, and more particularly in a tank containing flammable gases.

Moreover, turning now to the surveying field, recently, a so-called "light-wave alidade" in which an alidade and a short-range type light-wave rangefinder are combined has been utilized for a plane-table survey to contribute to labor saving. In this case, however, the large body of the light-wave rangefinder is added to the alidade, and therefore, a problem still remains in manipulation as compared with usual alidades.

The present invention has been made in an attempt to solve all the problems noted above.

It is a first object of the present invention to provide a distance measuring system including a light-wave rangefinder which can be more widely used than the conventional ones for various measuring fields and objects in various measuring environments.

It is a second object of the present invention to provide a novel distance measuring system which is smaller in size and easier to manipulate than a conventional light-wave alidade.

SUMMARY OF THE INVENTION

To achieve these objects noted above, the present invention provides a distance measuring system including an optical adapter in combination with a light-wave rangefinder which latter comprises light emitting means for emitting a distance measuring light-wave modulated by a predetermined modulation frequency, light receiving means for receiving a reflection light-wave reflected from a target to which the distance measuring light-wave is directed, objective optical means for projecting the distance measuring light toward the target and for condensing the reflection light-wave, and means for detecting a time delay between the distance measuring light-wave and the reflection light-wave, said time delay corresponding to the distance from the light-wave rangefinder to the target, in order to determine said distance ; said adapter comprising :

- a first objective optical means which are substantially identical in structure with the objective optical means of the light-wave rangefinder and able to be optically connected with the objective optical means ;
- a first optical fiber made of a graded index fiber and connected at one end thereof to said first objective optical means for photoconducting the distance measuring light ;
- a second optical fiber made of a graded index fiber and connected at one end to said first objective optical means for photoconducting the reflection light, and ;
- second objective optical means connected to the other ends of said first and second optical fibers for projecting the distance measuring light transmitted through said first optical fiber toward the target and for receiving and directing the reflection light to said second optical fiber ;

characterized in that said means for detecting a time delay between the distance measuring light-wave and the reflection light-wave, and for determining the distance from the light-wave rangefinder to the target comprise :

- an oscillator producing at an output a signal at a first frequency ;
- a frequency divider respectively producing at a first and a second outputs, signals at second and third frequencies ;
- a first switch connected to the second output of the frequency divider and to the output of the oscillator and having an output connected to said light emitting means ;
- a processing control circuit connected to a control input of the first switch so that the output of this first switch provides a signal at a first or second frequency, this processing unit being also connected to the second output of the frequency divider ;
- a synthetizer connected to the output of the oscillator and providing respectively at first and second outputs, signals at fourth and fifth frequencies ;
- a second switch connected to the outputs of the synthetizer, having a control input connected to the processing control unit so as to provide at an output a signal at fourth frequency or fifth frequency ;
- a mixer connected to the output of the second switch and to an output of an amplifier which receives a signal provided by said light receiving means, this mixer providing at an output a beat signal detected to produce a sine wave at said third frequency ;
- a waveform shaping circuit connected to the output of the mixer and providing at an output a rectangular wave at the third frequency ;
- a gate circuit connected to the second output of the first frequency divider, to the output of the wave form shaping circuit and to the output of the oscillator, the third frequency signal from the frequency divider acting as a start signal and the rectangular wave at a third frequency acting as a stop signal ;
- a counter connected to an output of the gate circuit and counting the number of the oscillations of the first frequency signal between the start and stop signals so as to provide a count indicating the phase difference between the third frequency signal and the rectangular wave signal, this count being provided to an output connected to the processing unit which provides a value of the distance of the target.

BRIEF DESCRIPTION OF THE DRAWINGS

The present invention will now be described, by way of example, with reference to the accompanying drawings, in which :

Fig. 1 is a schematic diagram showing the way of use of a first embodiment of the invention ;

Fig. 2 is a block diagram showing the construction of the first embodiment ;

Fig. 3 is a partial sectional view showing part of the first embodiment ;

Fig. 4 is a diagram showing a second embodiment of the invention ; and

Fig. 5 is a block diagram showing the light-wave rangefinder used with the second embodiment.

DESCRIPTION OF THE PREFERRED EMBODIMENTS

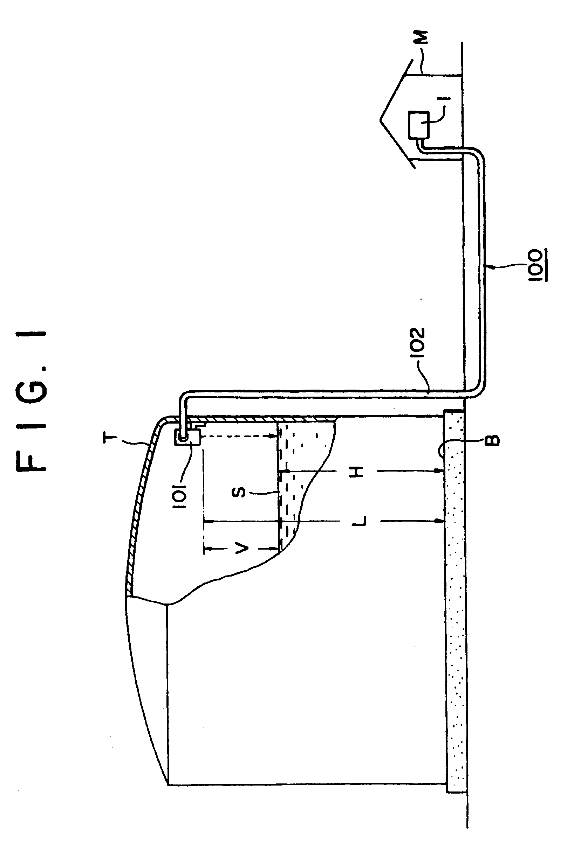

Figure 1 is a schematic view showing an example in which a light-wave rangefinder is utilized for measuring the liquid level in a crude oil tank making use of an optical adapter in accordance with the present invention. On the inner wall of a crude oil tank T is mounted a front objective lens system 101, which is an objective optical means of an optical adapter 100 with an objective lens opposed to a crude oil surface S. The objective lens system 101 is connected to a light-wave rangefinder 1 installed in a management house M through a photoconduction pipe 102 which is a photoconduction means. A measuring light emitted from the light-wave rangefinder 1 is transmitted through the photoconduction pipe 102 and projected from the objective lens system 101 towards the crude oil surface S. The reflecting light from the surface S is again received by the objective lens system 101, after which the light is transmitted to the light-wave rangefinder 1 through the photoconduction pipe 102. A time delay, for example, a phase difference between the light reflected at the liquid surface and the aforesaid distance measuring light, is measured by the light-wave rangefinder 1, and the distance V from the objective lens system 101 and the crude oil surface S is determined precisely from said phase difference. The distance L from the bottom surface B of the tank T to the objective lens system 101 is measured beforehand, and the height H of crude oil surface can be determined with accuracy from the difference between the value of said distance L and the aforementioned measured value V.

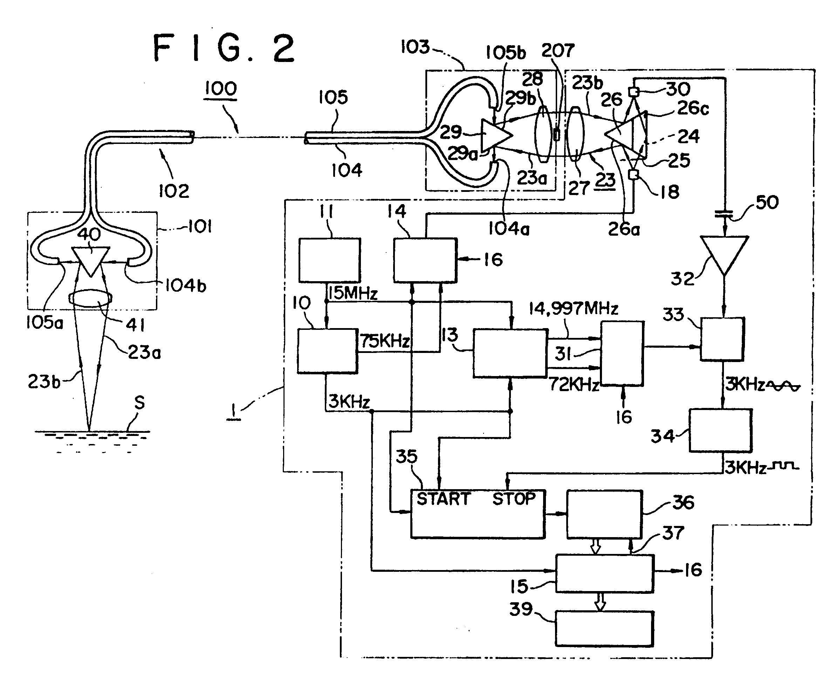

Figure 2 is a block diagram of the above-described liquid surface height measuring system. This liquid surface height measuring system consists of the light-wave rangefinder 1 and the optical adapter 100 connected thereto.

A frequency divider 10 of the light-wave rangefinder 1 divides a 15 MHz signal from an oscillator 11 to generate two signals of 75 KHz and 3 KHz. A synthesizer 13 generates a signal of 14.997 MHz which is a difference between 15 MHz from the oscillator and 3 KHz from the frequency divider 10 (15 MHz - 3KHz), and another signal of 72 KHz which is 24 times 3 KHz from the frequency divider 10. A first switch 14 is controlled by a signal 16 from a processing control circuit 15, so as to put out a signal of either 15 MHz or 75 KHz.

A light emitting element 18 comprising a light emitting diode radiates a light modulated by the output signal of the first switch 14. The modulated light released from the light emitting element 18 is released to either distance measuring light path 23 or internal reference light path 24 by a shutter 25 by which the distance measuring light path 23 and internal reference light path 24 are switched. In the event the distance measuring light path 23 is slected, the modulated light is reflected at an inclined surface 26a of a prism 26 and thereafter shaped into a bundle of parallel light rays by means of an objective lens 27 and is incident upon an objective lens 28 of an objective lens system of an optical adapter 100. The distance measuring light 23a projected from the objective lens 28 is reflected at a reflecting surface 29a of a prism 29 and focused at an incident end 104a of an optical fiber 104 which constitutes a photoconduction pipe 102. A secondary light source image of the light emitting element 18 is thus formed on the end 104a of the optical fiber 104. The light transmitted through the optical fiber 104 is projected from the other end 104b of the optical fiber 104 onto a reflecting prism 40 in the housing (not shown) of the objective lens system 101. The light 23a reflected by the prism 40, after passing through an objective lens 41, falls on the crude oil surface S which is the target. The light reflected at the liquid surface S, after travelling past the lens 41 and the prism 40, enters an optical fiber 105 which constitutes the photoconduction pipe 102 together with the aforementioned optical fiber 104. The reflected light is thrown out from the opposite end 105b after passing through the optical fiber 105. Since the end 105b is located at a position conjugate with a focus of the objective lens 28, the light 23b from the optical fiber 105 is, after being reflected at a reflecting surface 29b of the prism 29, formed into a bundle of parallel light rays by the objective lens 28 and enters the light-wave rangefinder 1. The objective lens 27 of the light-wave rangefinder 1 causes the light 23b to fall upon a light receiving element 30, which comprises an avalanche photodiode, past the prism 26. When the internal reference light path is selected by the shutter 25, the modulated light from the light emitting element 18 is reflected at an internal reflecting surface 26c of the prism 26 and is directly incident upon the light receiving element 30.

This internal reference light path is provided so as to prohibit an error in distance measuring data from being generated by changes in phase due to a temperature drift or the like of an electric circuit which constitutes the light-wave rangefinder itself. The measured value by the internal reference light path is subtracted by the measured value by the distance measuring light path to obtain accurate distance measuring data.

A second switch 31 is controlled by the signal 16 from the processing control circuit 15 so as to provide an output signal of either 14.997 MHz or 72 KHz. The output from the light receiving element 30, past a capacitor 50, is amplified by an amplifier 32 whose output is supplied to the mixer 33. The mixer 33 mixes the signal from the amplifier 32 and the signal from the second switch 31 to form a beat signal, which is detected to produce an output sine wave of 3 KHz. A waveform shaping unit 34 shapes the sine wave of 3 KHz into a rectangular wave. A gate circuit 35 receives the 3 KHz signal from the frequency divider 10 as a start signal, and the signal from the waveform shaping unit as the stop signal, and allows between the start and stop signals the 15 MHz signal from the oscillator 11. This signal is counted by the counter 36 to measure the phase difference. The counted value obtained by the counter 36 is the total number obtained by N times of measurement. To know the frequency of N times, the signal of 3 KHz from the frequency divider 10 is supplied to the processing control circuit 15. Upon termination of counting of N times, a reset signal 37 is supplied from the processing control circuit 15 to the counter 36 so that the counter 36 is reset. The counted value of measurement of N times is multiplied by 1/N in the processing control circuit to obtain an average value, which is converted into distance which is then displayed on a display 39. It is noted that the distance here obtained is the sum $(V + \ell)$ of the length $\ell$ of the optical adapter and the distance V from the front end of the optical adapter to the liquid surface. Since the length $\ell$ of the optical adapter is known, and the distance $L + \ell$ to the bottom surface of the tank has been pre-measured precisely, the liquid surface height H can be obtained by

$$H = (L + \ell) - (V + \ell)$$

This calculation is executed by the processing control circuit.

For setting the output of the mixer 33 to 3 KHz, the output signal of the first switch 14 and the output signal of the second switch 31 are controlled by the signal 16 from the processing control circuit 15 such that their frequencies are 15 MHz and 14.997 MHz respectively, or 75 KHz and 72 KHz respectively. The two modulation frequencies for the light emitting element 18, 15 MHz and 75 KHz, corresponding to wave lengths 20 m and 4 Km respectively, are used for precise measurement and rough measurement respectively. Frequencies of 15 MHz and 75 KHz are reduced to 3 KHz by the mixer 33 to improve the resolving power of phase measurement or to reduce the phase of 15 MHz or 75 KHz to the phase of 3 KHz for measurement.

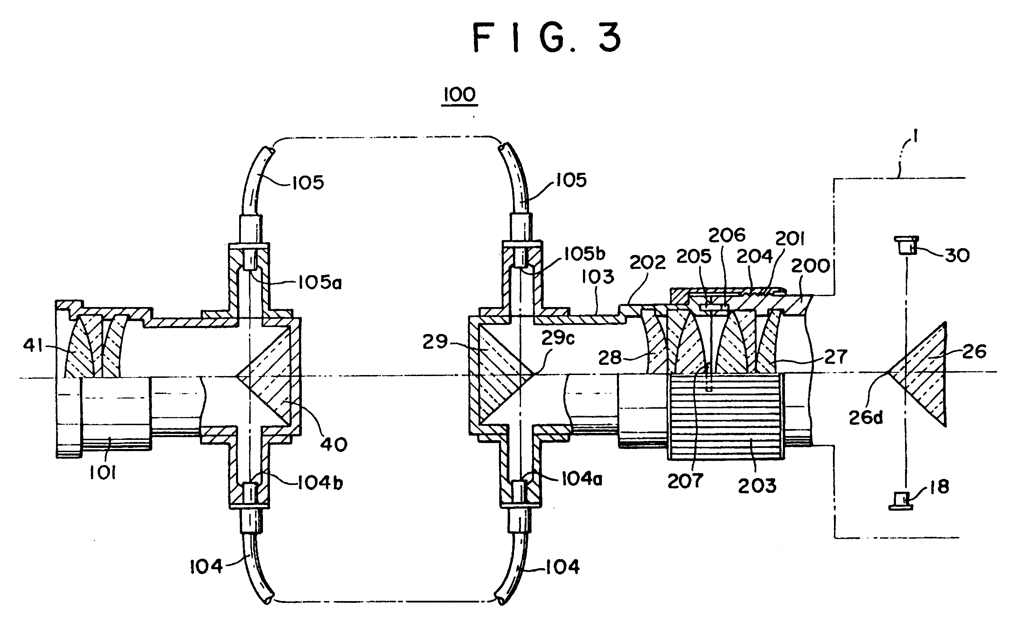

Figure 3 is a partial sectional view showing the construction of the optical adapter 100. Parts identical to or equal to those shown in Figure 2 are indicated by the same reference numeral, and duplicate explanation will be omitted. An objective lens mount 200 of the light-wave rangefinder 1 is formed with an external thread portion 201, threadedly engaged on which is an internal thread portion 204 of a mounting ring 203 fitted on an objective lens mount 202 of the objective lens system 103 of the optical adapter 100. The objective lens system 103 is thus connected to the light-wave rangefinder 1.

A locating pin 205 is provided on the fore end of the lens mount 202, and this pin is fitted into an engaging hole 206 formed in the lens mount 200 of the light-wave rangefinder, whereby optical axes of the objective lenses 27 and 28 are disposed in line and confronting edges 26d and 29c of the prisms 26 and 29 are disposed parallel with each other. In front of the objective lens 28 in the lens mount 202 there is provided an elongate diaphragm plate 207 laterally extending across the optical axis of the lens 28. This plate 207 serves to prevent interference between the light toward the target and the light from the target, which interference may degrade the measurement. In the illustrated embodiment, the objective lenses 27, 28 and 41 all have the same lens structure; use of lenses of the same structure results in reduction in manufacturing costs and contributes to stabilization of optical characteristics.

As will be understood from the above-described embodiment, only the front objective lens system 101 of the optical adapter 100 is installed internally of the crude oil tank T, and the body of the light-wave rangefinder may be installed interiorly of the management house M away front the tank. Therefore, measurement can be easily accomplished, and concentrated measurement of heights of the liquid surfaces S of a number of crude oil tanks T is possible. In addition, since the light-wave rangefinder body need not be installed within the tank T, there is no danger of explosion occurring due to short-circuiting or spark of an electronic circuit housed in the body itself, which is preferable in terms of explosion prevention.

Since the emitting optical fiber 104 and receiving optical fiber 105 which constitute the photoconduction pipe 102 are long, if an ordinary SI (Step Index) fiber is used, individual light rays may travel different distances in the optical fiber; the difference may result in phase difference between the individual light rays, which will cause an error in distance measuring data. For solving this drawback, GI (Graded Index) fiber should be used. Any light rays will travel the same distance through a GI fiber, so that such fiber will cause no phase difference.

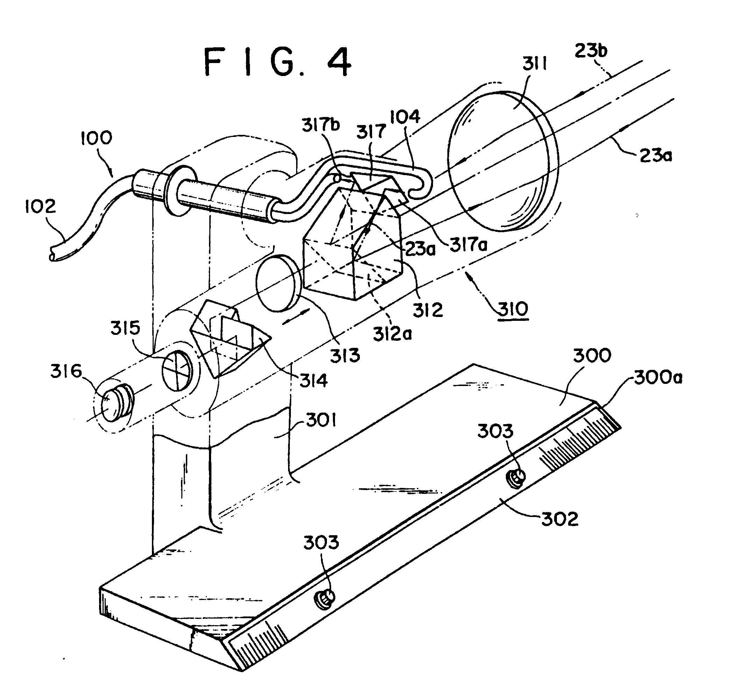

Figure 4 shows a second embodiment of the optical adapter in accordance with the present invention installed in a light-wave alidade. The alidade comprises a base bed 300 to be placed on a flat plate and a telescope section 310 rotatably mounted on a column 301 of the base bed 300. A longitudinally extending inclined surface 300a is formed on one side of the base bed 300. A measure 302 of a desired scale may be mounted on the inclined surface 300a by mounting screws 303, which is used for plotting points on a recording paper on the flat plate in accordance with the measurements.

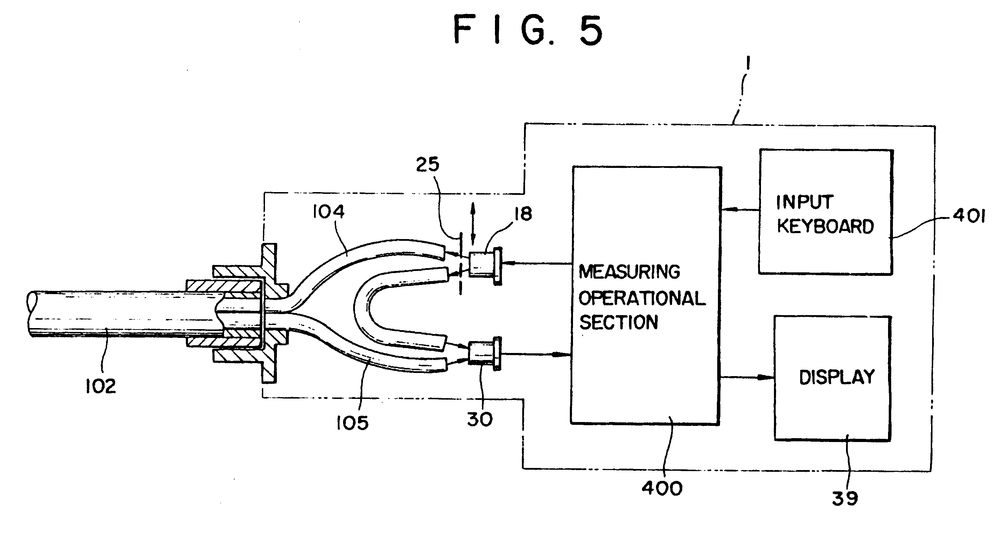

The telescope section 310 comprises an objective lens 311, a dichroic prism 312, a focusing lens 313, an erecting optical device 314, a collimating reticle plate 315 and an eye piece 316 to constitute a collimation telescope for collimating the alidade. A dichroic surface 312a of the dichroic prism 312 is transparent to visible light, but reflective to infrared light which is the distance measuring light. The distance measuring light 23a from the light emitting element 18 shown in Figure 5 is, after being thrown out of the optical fiber 104, reflected at a reflecting surface 317a of the prism 317 and at the dichroic surface 312a, and then it is directed through the objective 311 towards a reflector (not shown) placed at the target point. The reflected light 23b reflected from the reflector again passes through the objective lens 311 and is reflected at the dichroic surface 312a of the dichroic prism 312. The light 23b is then reflected at the other reflecting surface 317b of the prism 317 and then enters the optical fiber 105. The light is, after travelling through the optical fiber 105, received by the light receiving element 30 as shown in Figure 5, and thereafter, the distance is obtained from a measuring operational section 400 similar to the aforementioned first embodiment and is displayed on a display 39. An input keyboard 401 is provided to input various control commands and correction data or to input measured value conversion commands. According to this embodiment, it is possible to provide a light-wave alidade having a collimating telescope which, although the inlet and outlet ends of a light conduction pipe 102 and a dichroic prism 312 are incorporated, is of almost the same size as a known telescope for alidade.

In addition, the light-wave rangefinder 1 has the same construction as an ordinary light-wave rangefinder, and therefore, it is not necessary to make forcible design for miniaturization and to delete unavoidable functional elements. Besides, if the light-wave rangefinder 1 is not made of the exclusive use type as shown in Figure 5 but the incident side of the optical adapter is constructed as shown in Figure 3, it can serve also as a general light-wave rangefinder.

In the above-mentioned first and second embodiments, the photoconduction pipe 102 is constituted by two separate optical fibers, one 104 for transmission and the other 105 for reception. The provision of separate optical fibers is preferable in order to prevent interference between the distance measuring light and reflected light, but is not always essential. In addition, in an application wherein, as in the first embodiment, the front objective lens system is fixed and not often moved, this photo-conduction pipe 102 need not be constituted by optical fibers but may be substituted by a well known mirror and lens system.

**Claims**

1.  Distance measuring system including an optical adapter (100) in combination with a light-wave rangefinder (1) which latter comprises light emitting means (18) for emitting a distance measuring light-wave (23a) modulated by a predetermined modulation frequency, light receiving means (30) for receiving a reflection light-wave (23b) reflected from a target to which the distance measuring light-wave is directed, objective optical means (26, 27) for projecting the distance measuring light toward the target and for condensing the reflection light-wave (23b), and means (15, 35, 36) for detecting a time delay between the distance measuring light-wave (23a) and the reflection light-wave (23b), said time delay corresponding to the distance from the light-wave rangefinder (1) to the target, in order to determine said distance ; said adapter comprising :
    -   a first objective optical means (103 : 28, 29) which are substantially identical in structure with the objective optical means (26, 27) of the light-wave rangefinder (1) and able to be optically connected with the objective optical means (26, 27) ;
    -   a first optical fiber (104) made of a graded index fiber and connected at one end thereof to said first objective optical means (103 : 28, 29) for photoconducting the distance measuring light (23a) ;
    -   a second optical fiber (105) made of a graded index fiber and connected at one end to said first objective optical means (103 : 28, 29) for photo-conducting the reflection light (23b), and ;
    -   second objective optical means (101 : 40, 41) connected to the other ends of said first and second optical fibers (104, 105) for projecting the distance measuring light (23a) transmitted through said first optical fiber (104) toward the target and for receiving and directing the reflection light (23b) to said second optical fiber (105) ;

    characterized in that said means for detecting a time delay between the distance measuring light-wave and the reflection light-wave, and for determining the distance from the light-wave rangefinder to the target, comprise :
    -   an oscillator (11) producing at an output a signal at a first frequency ;
    -   a frequency divider (10) respectively producing at a first and a second outputs, signals at second and third frequencies ;
    -   a first switch (14) connected to the second output of the frequency divider (10) and to the output of the oscillator and having an output connected to said light emitting means (18) ;
    -   a processing control circuit (15) connected to a control input (16) of the first switch (14) so that the output of this first switch provides a signal at a first or second frequency, this processing unit being also connected to the second output of the frequency divider (10) ;
    -   a synthetizer (13) connected to the output of the oscillator (11) and providing respectively at first and second outputs, signals at fourth and fifth frequencies ;
    -   a second switch (31) connected to the outputs of the synthetizer (13), having a control input connected to the processing control unit (15) so as to provide at an output a signal at fourth frequency or fifth frequency ;
    -   a mixer (33) connected to the output of the second switch and to an output of an amplifier (32) which receives a signal provided by said light receiving means (30), this mixer providing at an output a beat signal detected to produce a sine wave at said third frequency ;
    -   a waveform shaping circuit (34) connected to the output of the mixer (33) and providing at an output a rectangular wave at the third frequency ;
    -   a gate circuit (35) connected to the second output of the first frequency divider (10), to the output of the waveform shaping circuit (34) and to the output of the oscillator, the third frequency signal from the frequency divider (10) acting as a start signal and the rectangular wave at a third frequency acting as a stop signal ;

- a counter (36) connected to an output of the gate circuit (35) and counting the number of the oscillations of the first frequency signal between the start and stop signals so as to provide a count indicating the phase difference between the third frequency signal and the rectangular wave signal, this count being provided to an output connected to the processing unit (15) which provides a value of the distance of the target.

2. System according to claim 1, characterized in that the objective optical means (26, 27) of the light-wave rangefinder (1) and said first objective optical means (103: 28, 29) include engaging means (201, 203, 204) for engaging each other.

3. System according to claim 1, characterized in that said second objective optical means (101: 40, 41) is further substantially identical in structure with the objective optical means (26, 27) of the light-wave rangefinder (1).

**Patentansprüche**

1. System zur Entfernungsmessung mit einem optischen Adapter (100) in Verbindung mit einem Lichtwellenentfernungsmesser (1), der eine Lichtsendevorrichtung (18) zum Aussenden einer eine Entfernung messenden Lichtwelle (23a), die mit einer vorbestimmten Modulationsfrequenz moduliert ist, eine Lichtempfangsvorrichtung (30) zum Empfangen einer an einem Ziel reflektierten Welle (23b), auf das die eine Entfernung messende Lichtwelle gerichtet ist, eine optische Objektiveinrichtung (26,27) zum Projizieren des eine Entfernung messenden Lichts auf das Ziel und zum Sammeln der reflektierten Lichtwellen (23b) und eine Einrichtung (15,35,36) zum Erfassen einer Zeitverzögerung zwischen der eine Entfernung messenden Lichtwelle (23a) und der reflektierten Lichtwelle (23b) aufweist, wobei die Zeitverzögerung der Entfernung von dem Lichtwellenentfernungsmesser (1) zu dem Ziel entspricht, um diese Entfernung zu bestimmen, und wobei der Adapter umfaßt:

- eine erste optische Objektiveinrichtung (103:28,29), die im Aufbau im wesentlichen identisch ist mit der optischen Objektiveinrichtung (26,27) des Lichtwellenentfernungsmessers (1) und optisch mit dieser verbindbar ist,

- eine erste optische Faser (104), die als Gradientenfaser ausgebildet ist und an einem Ende mit der ersten optischen Objektiveinrichtung (103:28,29) verbunden ist, um das eine Entfernung messende Licht (23a) optisch zu leiten,

- eine zweite optische Faser (105), die als Gradientenfaser ausgebildet ist und mit einem Ende mit der ersten optischen Objektiveinrichtung verbunden ist, um das reflektierte Licht (23b) optisch zu leiten, und

- eine zweite optische Objektiveinrichtung (101:40,41), die an die anderen Enden der ersten und zweiten optischen Faser (104,105) angeschlossen ist, um das eine Entfernung messende Licht (23a), das durch die erste optische Faser (104) auf das Ziel geleitet wird, zu projizieren und um das reflektierte Licht (23b) zu empfangen und auf die zweite optische Faser (105) zu richten,

**dadurch gekennzeichnet,**

daß die Einrichtung zum Erfassen einer Zeitverzögerung zwischen der eine Entfernung messenden Lichtwelle und der reflektierten Lichtwelle und zum Bestimmen der Entfernung von dem Lichtwellenentfernungsmesser zum Ziel umfaßt:

- einen Oszillataor (11), der an einem Ausgang ein Signal mit einer ersten Frequenz erzeugt,

- einen Frequenzteiler (10), der an seinem ersten und zweiten Ausgang ein Signal mit einer zweiten und einer dritten Frequenz erzeugt,

- einen ersten Schalter (14), der mit dem zweiten Ausgang des Frequenzteilers (10) und mit dem Ausgang des Oszillators verbunden ist und dessen Ausgang mit der Lichtsendevorrichtung (18) verbunden ist,

- einen Verarbeitungssteuerkreis (15), der mit einem Steuereingang (16) des ersten Schalters (14) verbunden ist, derart, daß an dem Ausgang des ersten Schalters (14) ein Signal mit der ersten oder zweiten Frequenz anliegt, wobei die Verarbeitungseinheit auch mit dem zweiten Ausgang des Frequenzteilers (10) verbunden ist,

- einen Frequenzgenerator (13), der mit dem Ausgang des Oszillators (11) verbunden ist und an seinem ersten und zweiten Ausgang Signale mit einer vierten und fünften Frequenz liefert,

- einen zweiten Schalter (31), der mit den Ausgängen des Frequenzsgenerators (13) verbunden ist und dessen Steuereingang mit der Verarbeitungssteuereinheit (15) verbunden ist, derart, daß an seinem Ausgang entweder das Signal mit der vierten Frequenz oder das Signal mit der fünften Frequenz anliegt,
- einen Mischer (33), der mit dem Ausgang des zweiten Schalters und mit dem Ausgang eines Verstärkers (32) verbunden ist, der ein Signal von der Lichtempfangsvorrichtung (30) empfängt, wobei der Mischer an seinem Ausgang ein Überlagerungssignal mit einer Sinusschwingung mit der dritten Frequenz vorsieht,
- einen Impulsformerkreis (34), der mit dem Ausgang des Mischers (33) verbunden ist und an seinen Ausgang eine Rechteckschwingung mit der dritten Frequenz liefert,
- eine Torschaltung (35), die mit dem zweiten Ausgang des ersten Frequenzteilers (10), dem Ausgang des Impulsformerkreises (34) und dem Ausgang des Oszillators verbunden ist, wobei das Signal mit der dritten Frequenz vom Frequenzteiler (10) als ein Startsignal und die Rechteckschwingung mit der dritten Frequenz als Stopsignal dient,
- einen Zähler (36), der mit dem Ausgang der Torschaltung (35) verbunden ist und die Anzahl der Schwingungen des Signals mit der ersten Frequenz zwischen dem Start- und Stopsignal zählt und eine Zählung liefert, die die Phasendifferenz zwischen dem Signal mit der dritten Frequenz und dem Signal mit der Rechteckschwingung angibt, wobei diese Zählung an einen mit der Verarbeitungseinheit (15) verbundenen Ausgang geliefert wird, die den Wert für die Entfernung des Zieles liefert.

2. System nach Anspruch 1, dadurch gekennzeichnet, daß die optische Objektiveinrichtung (26,27) des Lichtwellenentfernungsmessers (1) und die erste optische Objektiveinrichtung (103:28,29) erste Eingreifmittel (201,203,204) umfassen, um miteinander in Eingriff zu treten.

3. System nach Anspruch 1, dadurch gekennzeichnet, daß die zweite optische Objektiveinrichtung (101:40,41) in ihrem Aufbau im wesentlichen identisch zu der optischen Objektivvorrichtung (26,27) des Lichtwellenentfernungsmessers (1) ist.

**Revendications**

1. Système de mesure de distance incluant un appareil adaptateur optique (100) en combinaison avec un télémètre à ondes lumineuses (1), ce dernier comprenant des moyens d'émission de lumière (18) pour émettre une onde lumineuse de mesure de distance (23a) modulée par une fréquence de modulation prédéterminée, des moyens de réception de lumière (30) pour recevoir une onde lumineuse de réflexion (23b) réfléchie à partir d'une cible sur laquelle l'onde lumineuse de mesure de distance est dirigée, des moyens optiques d'objectif (26, 27) pour projeter la lumière de mesure de distance vers la cible et pour concentrer l'onde lumineuse de réflexion (23b), et des moyens (15, 35, 36) pour détecter un temps de propagation entre l'onde lumineuse de mesure de distance (23a) et l'onde lumineuse de réflexion (23b), ledit temps de propagation correspondant à la distance du télémètre à ondes lumineuses (1) à la cible, afin de déterminer ladite distance; ledit appareil adaptateur comprenant :

- des premiers moyens optiques d'objectif (103 : 28, 29) qui sont sensiblement identiques en structure aux moyens optiques d'objectif (26, 27) du télémètre à ondes lumineuses (1) et capables d'être reliés optiquement aux moyens optiques d'objectif (26, 27);
- une première fibre optique (104) composée d'une fibre à gradient d'indice et reliée à une extrémité de celle-ci auxdits premiers moyens optiques d'objectif (103 : 28, 29) pour guider par photoconduction la lumière de mesure de distance (23a);
- une deuxième fibre optique (105) composée d'une fibre à gradient d'indice et reliée à une extrémité auxdits premiers moyens optiques d'objectif (103 : 28, 29) pour guider par photoconduction la lumière de réflexion (23b); et
- des deuxièmes moyens optiques d'objectif (101 : 40, 41) reliés à l'autre extrémité desdites première et deuxième fibres optiques (104, 105) pour projeter la lumière de mesure de distance (23a) transmise à travers ladite première fibre optique (104) vers la cible et pour recevoir et diriger la lumière de réflexion (23b) sur ladite deuxième fibre optique (105);

    caractérisé en ce que lesdits moyens pour détecter un temps de propagation entre l'onde lumineuse de mesure de distance et l'onde lumineuse de réflexion, et pour déterminer la distance du télémètre à ondes lumineuses à la cible, comprennent :

- un oscillateur (11) produisant à une sortie un signal à une première fréquence;
- un diviseur de fréquence (10) produisant respectivement à une première et une deuxième sorties, des signaux à une deuxième et une troisième fréquences;
- un premier commutateur (14) relié à la deuxième sortie du diviseur de fréquence (10) et à la sortie et l'oscillateur et ayant une sortie reliée auxdits moyens d'émission de lumière (18);
- un circuit de commande de traitement (15) relié à une entrée de commande (16) du premier commutateur (14) de telle sorte que la sortie de ce premier commutateur fournit un signal à une première ou une deuxième fréquence, cette unité de traitement étant aussi reliée à la deuxième sortie du diviseur de fréquence (10);
- un synthétiseur (13) relié à la sortie de l'oscillateur (11) et fournissant respectivement aux première et deuxième sorties, des signaux à une quatrième et une cinquième fréquences;
- un deuxième commutateur (31) relié aux sorties du synthétiseur (13), ayant une entrée de commande reliée à l'unité de commande de traitement (15) de manière à fournir à une sortie un signal à la quatrième fréquence ou à la cinquième fréquence;
- un mélangeur (33) relié à la sortie du deuxième commutateur et à une sortie d'un amplificateur (32) qui reçoit un signal fourni par lesdits moyens de réception de lumière (30), ce mélangeur fournissant à une sortie un signal de battement détecté pour produire une onde sinusoïdale à ladite troisième fréquence;
- un circuit de mise en forme de forme d'onde (34) relié à la sortie du mélangeur (33) et fournissant à une sortie une onde rectangulaire à la troisième fréquence;
- un circuit porte (35) relié à la deuxième sortie du premier diviseur de fréquence (10), à la sortie du circuit de mise en forme de forme d'onde (34) et à la sortie de l'oscillateur, le signal à la troisième fréquence du diviseur de fréquence (10) agissant comme un signal de départ et l'onde rectangulaire à la troisième fréquence agissant comme un signal d'arrêt;
- un compteur (36) relié à une sortie du circuit porte (35) et comptant le nombre des oscillations du signal à la première fréquence entre les signaux de départ et d'arrêt, de manière à fournir un compte indiquant la différence de phase entre le signal à la troisième fréquence et le signal à onde rectangulaire, ce compte étant fourni à une sortie reliée à l'unité de traitement (15) qui fournit une valeur de la distance de la cible.

2. Système selon la revendication 1, caractérisé en ce que les moyens optiques d'objectif (26, 27) du télémètre à ondes lumineuses (1) et lesdits premiers moyens optiques d'objectif (103 : 28, 29) incluent des moyens d'assemblage (201, 203, 204) pour s'assembler les uns les autres.

3. Système selon la revendication 1, caractérisé en ce que lesdits deuxièmes moyens optiques d'objectif (101 : 40, 41) sont de plus sensiblement identiques en structure aux moyens optiques d'objectif (26, 27) du télémètre à ondes lumineuses (1).

# FIG. 1

EP 0 135 423 B1

# FIG. 2

EP 0 135 423 B1

# FIG. 3

EP 0 135 423 B1

# F I G. 4

EP 0 135 423 B1

F I G. 5

INPUT KEYBOARD

DISPLAY

MEASURING OPERATIONAL SECTION

401

39

400

18

25

30

104

105

102

14